# EUROPEAN PATENT APPLICATION

(11) **EP 3 395 209 A1**
(43) Date of publication of application: **31.10.2018**
(21) Application number: 16879383.4
(22) Date of filing: 22.12.2016
(51) Int. Cl.: A47J 19/06, A47J 19/02

(54) **JUICE EXTRACTOR**

(30) Priority: 22.12.2015 KR 20150184055
(71) Applicant: Kim, Young Ki, Gyeongsangnam-do 51006 (KR)
(72) Inventor: Kim, Young Ki, Gyeongsangnam-do 51006 (KR)
(74) Representative: Wallinger Ricker Schlotter Tostmann
(86) International application number: PCT/KR2016/015138
(87) International publication number: WO 2017/111516

(57) **Abstract**

The present invention relates to a juice extractor including: a main body part including a driving motor and a speed reducer inside the main body part; and a juice extracting drum, which is coupled to one side of the main body part and includes a screw and a net drum formed at an internal side of the juice extracting drum. A lower surface of the juice extracting drum may be formed with a residue discharge port, which discharges residue or ground materials vertically downwards.

## Description

### [Technical Field]

The present invention relates to a juice extractor, and more particularly, to a juice extractor, which allows residue or ground materials to directly fall in a vertically downward direction of a juice extracting drum, thereby very rapidly and efficiently discharging the residue and conveniently obtaining the ground materials or a product, such as ice cream, as necessary.

### [Background Art]

Recently, with a high interest in health at home, there increases use frequency of a juice extractor, by which a person is capable of directly extracting juice from a to-be-extracted target, such as vegetables, grains, and fruits, and drinking the juice.

A general operation form of the juice extractor is to grind, push, and squeeze a to-be-extracted target on a grater by using a principle that beans are ground by a millstone and juice of the beans are squeezed, as disclosed in Korean Patent No. 793852.

To this end, the juice extractor includes a driving unit providing rotary force, a juice extracting drum provided with a driving shaft receiving the rotary force from the driving unit, a screw connected with the driving shaft and compressing and grinding a to-be-extracted target by a screw spiral formed at a part thereof, and a net drum separating the juice produced by the screw. The driving unit providing rotary force to the juice extractor includes a motor and a speed reducer. The motor is mounted to a lower portion of the juice extracting drum and is connected with a driving shaft to transmit rotary force to the screw. To this end, the driving shaft penetrates the lower portion of the juice extracting drum and is connected with the screw.

The structure of the juice extractor in the related art commonly has a scheme, in which the juice and the residue are separately discharged to lateral surfaces, respectively. However, by this scheme, in which the residue is discharged in a lateral direction, when materials, such as celery, having rough fibers, are extracted in the form of juice, the residue receive pressure to have a tendency of being pushed in the lateral direction, and there is a problem in that the residue is not smoothly discharged. Further, there is a case where the residue is tangled inside the juice extracting drum, and in this case, the problem in that the residue is not discharged becomes more serious.

Further, since the driving shaft penetrates the juice extracting drum, when a packing part, which seals a space between the driving shaft and the juice extracting drum, is damaged, there is a problem in that the juice at an internal side of the juice extracting drum leaks to the outside or the leaked juice flows into the motor along the driving shaft.

In order to solve the problem, the driving unit including the motor and the speed reducer may also be disposed in an upper portion of the juice extracting drum. When the driving unit is disposed in the relatively upper portion of the juice extracting drum, the driving shaft connected with the driving unit transmits rotary force to the screw in the upper portion of the juice extracting drum. Accordingly, it is possible to prevent the juice from being leaked toward the motor. Accordingly, according to the structure, since weight of the driving unit is larger than that of other constituent elements, vibration may be generated when the juice extractor is operated. Further, the disposition of the driving unit in the upper portion of the juice extracting drum may make a center of gravity of the juice extractor high, thereby making stable driving difficult. Further, it is comparatively difficult to manufacture the juice extractor, in which the driving unit is disposed in the upper portion of the juice extracting drum, and mass production of the juice extractor is decreased. Further, the juice extractor has a scheme, in which the driving shaft protrudes from the upper portion to the lower portion, so that the mounting and the separation of the juice extracting drum is influenced by the protruding driving shaft, thereby being inconvenient.

### [DISCLOSURE]

### [Technical Problem]

The present invention has been made in an effort to provide a juice extractor, in which a driving motor of a driving unit is disposed in a lower portion of a housing and a speed reducer is installed to be extended from a center portion of the housing toward a juice extracting drum, thereby allowing residue to be discharged from the juice extracting drum vertically downwards.

### [Technical Solution]

An exemplary embodiment of the present invention provides a juice extractor, including: a main body part including a driving motor and a speed reducer inside the main body part; and a juice extracting drum, which is coupled to one side of the main body part and includes a screw and a net drum formed at an internal side of the juice extracting drum, in which a lower surface of the juice extracting drum is formed with a residue discharge port, which discharges residue or ground materials vertically downwards .

The residue discharge port may be formed at a position circumferentially corresponding to one or more net drum discharge ports formed in a lower surface of the net drum.

One pair of net drum discharge ports and one pair of residue discharge ports may be formed, and the one pair of net drum discharge ports and the one pair of residue discharge ports may be formed to face each other based on a center of the juice extracting drum.

The speed reducer may be spaced apart from a ground surface by a predetermined distance, one end of the speed reducer may be connected to an upper end portion of the driving motor and the other end of the speed reducer may be extended in a width direction so as to be horizontal to the ground surface, and a driving shaft may protrude from the other end of the speed reducer toward an upper side in a height direction so as to transmit rotary force to the screw.

The speed reducer may be formed of a plurality of gears or belts and transmit driving power of the driving motor to the screw.

The main body part may include a speed reducer housing extended from a center portion in a width direction, and a residue discharge passage communicating with the residue discharge port may be formed at one side of the speed reducer housing.

The residue discharge passage may be formed in a shape recessed from one side of the speed reducer housing toward the driving shaft.

The juice extractor may further include a cup, which receives residue or ground materials discharged through the residue discharge port, and the cup may include: a cup cover formed with an inlet fitted to the residue discharge passage; and a cup main body, in which residue or ground materials flowing in through the inlet are received.

The residue discharge passage may be formed in a shape, which is opened in a height direction and is closed in a width direction.

At least one fixing protrusion may be formed on an upper surface of the speed reducer housing, and at least one receiving recess may be formed at a position corresponding to at least one fixing protrusion in a lower surface of the juice extracting drum.

The main body part may include: a speed reducer housing, to which the speed reducer is mounted; a center portion, of which one end is extended from the speed reducer housing; and a driving shaft housing, which is formed at one end of the center portion and is provided with the driving shaft at an internal side of the driving shaft housing.

The main body part may further include: a seating part, which is formed in a shape of a circular ring at an external side in a radius direction based on the driving shaft housing and is provided so as to allow the juice extracting drum is seated; and a connection bridge, which connects the driving shaft housing and the seating part.

A plurality of protrusions may be formed on a lower surface of the juice extracting drum, and the center portion may be disposed between one pair of protrusions among the plurality of protrusions, and the connection bridge may be disposed between another one pair of protrusions among the plurality of protrusions, so that the juice extracting drum may be coupled to the seating part.

### [Advantageous Effects]

As described above, according to the exemplary embodiment of the present invention, the residue fall vertically downwards toward the ground surface, so that there is an effect in that the residue is very smoothly discharged.

Particularly, when the juice discharge passage is closed or a grinding net having no net holes is used, ground materials fall vertically downwards toward the ground surface, so that the ground materials are very smoothly discharged. Even when a user desires to obtain food, such as ice cream or smoothie, the effect is more increased.

Further, since the center of gravity is low compared to the case where the driving unit is installed in an upper portion, so that it is possible to more stably drive the juice extractor. In addition, since the speed reducer is installed while being spaced apart from the ground surface at a predetermined interval, it is possible to variously design a space between the speed reducer and the ground surface.

Further, since the speed reducer is extended from a center portion of the housing in a width direction and the driving shaft protrudes from an upper portion of the speed reducer toward the upper side in a state of being spaced apart from the housing in the width direction, the juice extracting drum is not influenced by other constituent elements during the detachment and the attachment, so that the juice extracting drum is easily mounted and dismantled, and is more firmly coupled.

Further, the driving motor is disposed in the lateral portion of the juice extracting drum, so that a problem in that juice and the like leak from the juice extracting drum to the driving motor is removed.

### [Description of the Drawings]

FIG. 1 is a perspective view of upper assembly of a juice extractor according to a first exemplary embodiment of the present invention.
FIG. 2 is a perspective view of lower assembly of the juice extractor according to the first exemplary embodiment of the present invention.
FIG. 3 is an upper perspective view of a state where a cup is disposed in a housing according to the first exemplary embodiment of the present invention.
FIG. 4 is a perspective view of upper assembly of a juice extractor according to a second exemplary embodiment of the present invention.
FIG. 5 is a perspective view of lower assembly of a juice extractor according to the second exemplary embodiment of the present invention.
FIG. 6 is an upper perspective view of a juice extractor according to a third exemplary embodiment of the present invention.
FIG. 7 is a lower perspective view of the juice extractor according to the third exemplary embodiment of the present invention.
FIG. 8 is a cross-sectional view of the juice extractor according to the third exemplary embodiment of the present invention.
FIG. 9 is a perspective view of a housing of the juice extractor according to the third exemplary embodiment of the present invention.
FIG. 10 is a perspective view of a juice extracting drum of the juice extractor according to the third exemplary embodiment of the present invention.
FIGS. 11 and 12 are perspective views of an internal side of the juice extracting drum of the juice extractor according to the third exemplary embodiment of the present invention.

### [Mode for Invention]

An exemplary embodiment of the present invention will hereinafter be described in detail with reference to the accompanying drawings.

Throughout the specification, unless explicitly described to the contrary, the word "comprise" and variations such as "comprises" or "comprising", will be understood to imply the inclusion of stated elements but not the exclusion of any other elements.

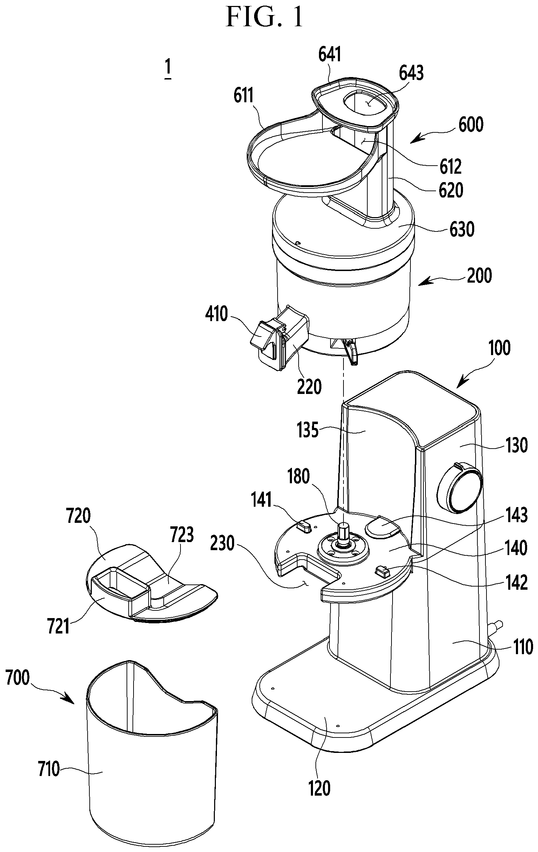

For convenience of the description, based on FIG. 1, a lower support part 120 side (a left side in the drawing) will be called "one side", "one end", "one end portion", and a name similar to them, and a main body part 110 side (a right side in the drawing) will be called "the other side", "the other end", "the other end portion", and a name similar to them. Further, a direction (a lower side in the drawing) close to a ground surface will be called a "lower side", a "lower surface", a "lower end", and a name similar to them, and a direction (an upper side in the drawing) far from the ground surface will be called an "upper side", an "upper surface", an "upper end", and a name similar to them. In the meantime, the left side and the right side of the drawing are called a "width direction", and the upper side and the lower side of the drawing are called a "height direction".

Throughout the specification, like reference numerals designate like elements throughout the specification.

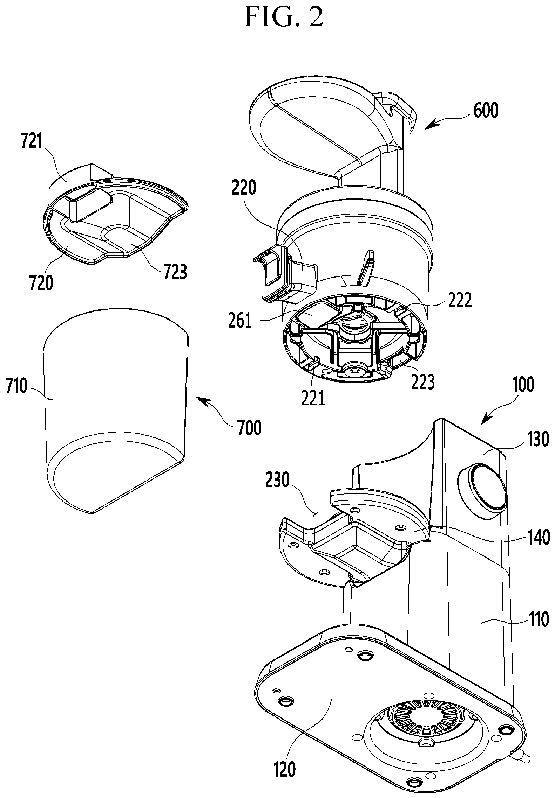

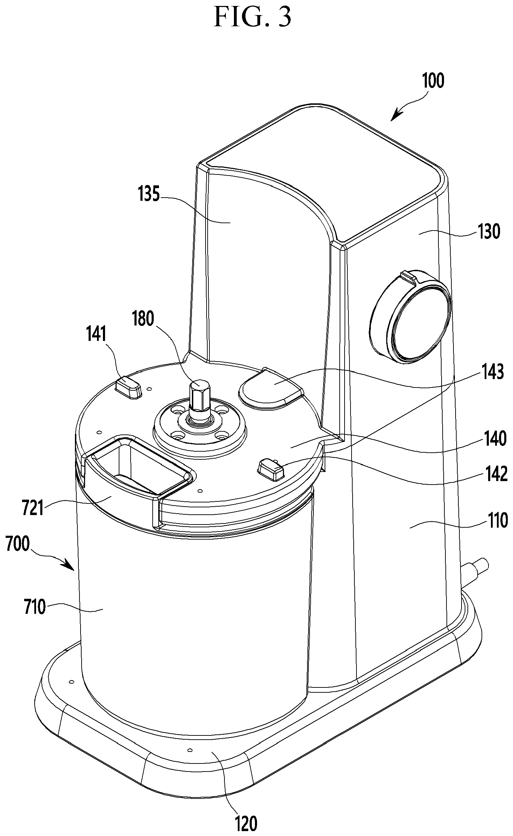

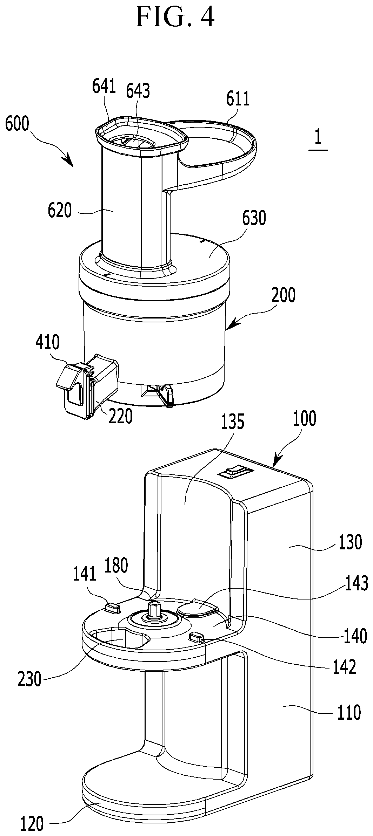

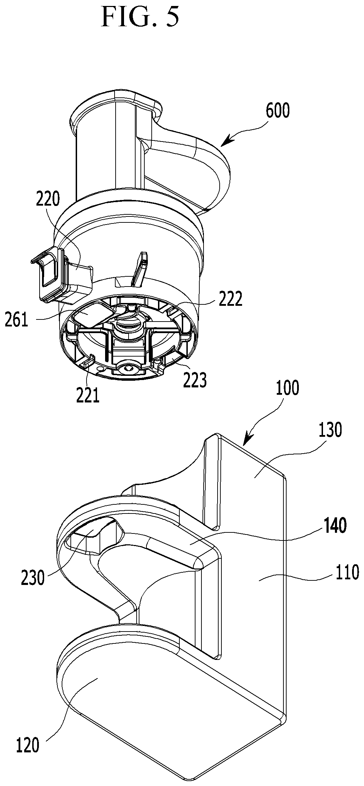

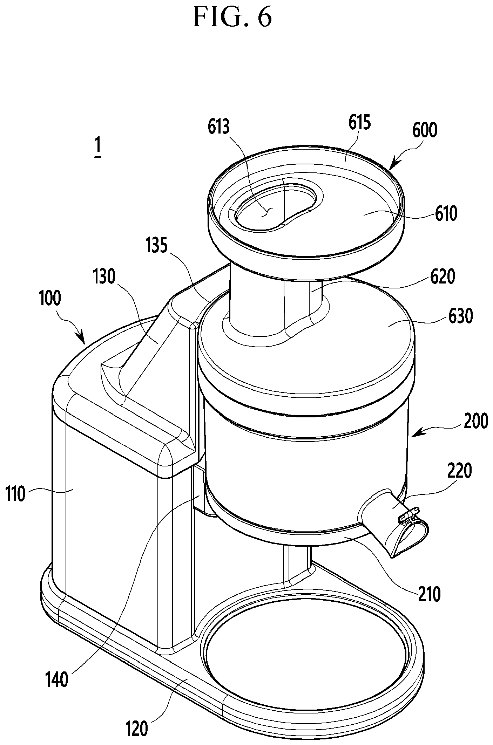

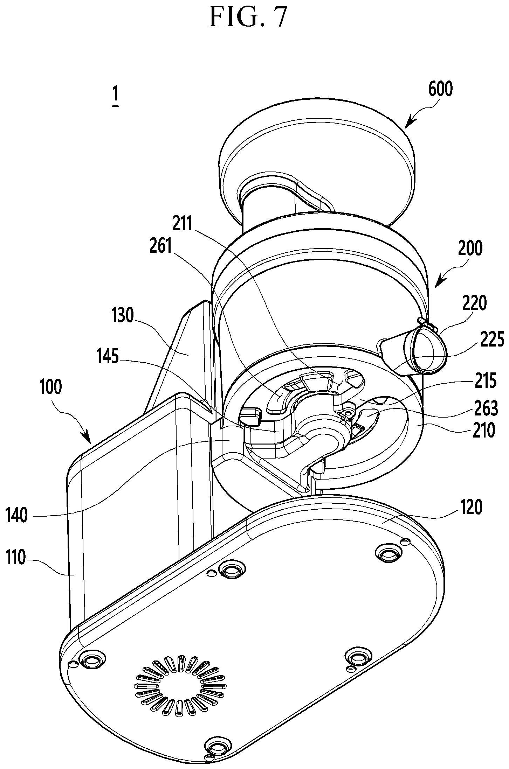

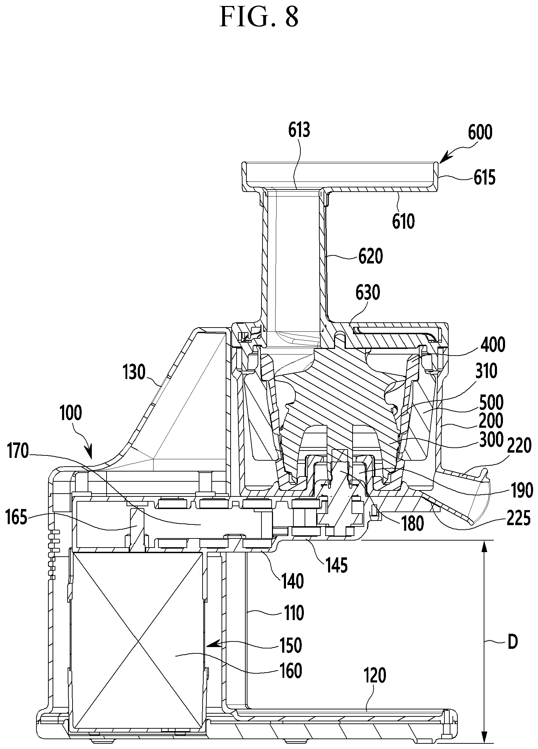

FIG. 1 is a perspective view of upper assembly of a juice extractor according to a first exemplary embodiment of the present invention, FIG. 2 is a perspective view of lower assembly of the juice extractor according to the first exemplary embodiment of the present invention, FIG. 3 is an upper perspective view of a state where a cup is disposed in a housing according to the first exemplary embodiment of the present invention, FIG. 4 is a perspective view of upper assembly of a juice extractor according to a second exemplary embodiment of the present invention, FIG. 5 is a perspective view of lower assembly of a juice extractor according to the second exemplary embodiment of the present invention, FIG. 6 is an upper perspective view of a juice extractor according to a third exemplary embodiment of the present invention, FIG. 7 is a lower perspective view of the juice extractor according to the third exemplary embodiment of the present invention, and FIG. 8 is a cross-sectional view of the juice extractor according to the third exemplary embodiment of the present invention.

The juice extractors illustrated in FIGS. 1 to 8 are examples of one among the various kinds of juice extractors for convenience of the description, and the technical spirit of the present invention is not limited and applied to the juice extractors exemplified in the present specification and is applicable to the various kinds of juice extractor.

Hereinafter, a juice extractor according to a first exemplary embodiment of the present invention illustrated in FIGS. 1 to 3, a juice extractor according to a second exemplary embodiment of the present invention illustrated in FIGS. 4 and 5, and a juice extractor according to a third exemplary embodiment of the present invention illustrated in FIGS. 6 to 8 will be described in more detail. Further, an internal structure of the juice extractors according to the first to third exemplary embodiments of the present invention will be described with reference to FIG. 8.

Referring to FIGS. 1 to 8, each of the juice extractors 1 according to the first to third exemplary embodiments of the present invention includes a housing 100, a juice extracting drum 200, a screw 300, a net drum 400, brushes 500, and a cover 600.

The housing 100 includes a main body part 110, which has a hollow cylinder shape and is extended from a ground in a height direction, a lower support part 120, which is extended from a lower end of the main body part 110 along a ground surface, an upper support part 130, which is disposed in an upper portion of the main body part 110 and is provided to support a lateral part of a juice extracting drum 200, and a speed reducer housing 140, which is extended from a center portion of the main body part 110 in a width direction.

A driving unit 150, which generates driving force and transmits the generated driving force to the screw 300, is provided inside the main body part 110. The driving unit 150 includes a driving motor 160, which performs a rotary motion, and a speed reducer 170, which receives rotary force from the driving motor 160.

Referring to FIG. 5, the driving motor 160 is mounted to perform a rotary motion centering on a rotary shaft 165 in a direction vertical to the ground surface, and the speed reducer 170 is connected to the rotary shaft 165. The driving motor 160 is mounted to a lower portion of the main body part 110 so as to suppress vibration and lower a center of gravity, and various driving motors are applicable according to a usage or a specification of the juice extractor 1.

The speed reducer 170 is extended from the center portion of the main body part 110 in a width direction along the speed reducer housing 140. That is, one end of the speed reducer 170 is connected with an upper portion of the driving motor 160, and the other end of the speed reducer 170 is extended in a direction horizontal to the ground surface. A driving shaft 180 protruding upwards is provided at the other end of the speed reducer 170, and the screw 300 may rotate by the driving shaft 180. The driving shaft 180 may be formed in a shape of a polyprism, but unlike this, a driving shaft having various shapes, which are capable of transmitting power, may be applied.

The speed reducer 170 may be formed of a plurality of gears so as to transmit power from the driving motor 160 to the driving shaft 180. The gears may be formed in various forms of gear. For example, a spur gear, a bevel gear, a screw gear, and a worm gear may be applied.

Further, the speed reducer 170 may transmit driving force of the driving unit 150 to the screw 300 by a belt. The belt may be formed in various forms, and for example, a fan belt, a flat belt, and a V belt may be applied.

As described above, the speed reducer 170 is installed between the driving motor 160 and the driving shaft 180 so as to be extended in a width direction of the juice extractor 1, so that the speed reducer 170 may be formed between the driving shaft 180 and the driving motor 160 at a predetermined interval in the width direction, thereby preventing the juice compressed by the screw 300 inside the juice extracting drum 200 from flowing into the driving motor 160 along the driving shaft 180.

According to the first to third exemplary embodiments of the present invention, the speed reducer 170 is connected to the upper end portion of the driving motor 160 to be configured to be spaced apart from the ground surface by a predetermined interval. The driving shaft 180 further protrudes from the upper portion of the speed reducer 170 in the upper direction. Accordingly, the user may easily mount or separate the juice extracting drum 200 to or from the housing 100 by freely moving the juice extracting drum 200 in the upper or lower direction in a state where the juice extracting drum 200 is not influenced by other constituent elements.

Further, the driving motor 160 is relatively installed in the lower portion of the main body part 110, and the center of gravity of the juice extractor 1 is generally low, so that the juice extractor 1 may be stably driven. An additional lower space is secured between the speed reducer 170 and the ground surface, thereby improving the degree of design freedom. For example, the lower space may be utilized as a space to which the extracted juice or the residue may be collected.

Particularly, according to the first to third exemplary embodiments of the present invention, the residue may fall toward the lower space of the juice extracting drum 200.

That is, the residue may continuously directly fall vertically downwards. As described above, when the residue fall vertically downwards, it is possible to more effectively discharge the residue than the case where the residue is discharged in the lateral direction. Accordingly, a load applied to the driving motor 160 is decreased, thereby enabling the juice extractor 1 to be stably driven and suppressing vibration.

For example, according to the related art, a discharge port of residue or juice is installed in a lateral portion of the juice extractor 1, and in this configuration, when the juice extractor 1 is actually used, a separate space for placing a residue cup or a juice cup for putting the residue or the juice is required in the lateral direction of the juice extractor 1. When the cups for putting the juice or the residue discharged from the juice extractor 1 are placed in the separate space, the juice extractor 1 gives an appearance disarrangement impression and degrades an esthetic sense of a user. Further, the residue is discharged in the lateral direction of the juice extractor 1 in the width direction, so that a separate residue discharge passage is required, the discharge of the residue is more inefficient than the case where the residue is discharge vertically downwards. That is, when the residue is discharged to the lateral portion of the juice extractor 1, frictional force is generated or an adsorption or cohesion phenomenon among the residue is incurred due to the tendency that the residue is pushed forward in the residue discharge passage, thereby disturbing the width-directional flow of the residue. As described above, when the movement of the residue is excessively slow, pressure inside the juice extracting drum 200 is sharply increased and the load of the driving motor 160 is increased. For example, when a to-be extracted target is formed of rough fibers, a larger load may be applied to the driving motor 160 and vibration may be generated in the juice extractor 1 by the load. Accordingly, the stable driving of the juice extractor 1 may be degraded and durability of the juice extractor 1 may deteriorate.

Further, according to the related art, the juice extractor has the configuration, in which the driving shaft protrudes from the upper portion of the juice extractor in the lower direction and the juice extracting drum receives the driving shaft inside thereof. However, according to the configuration, when the user mounts the juice extracting drum 200 to the housing 100 or separates the juice extracting drum 200 from the housing 100, the user needs to inconveniently avoid interference of the driving shaft 180 that protrudes downwards. In order to prevent the inconvenience, a separate device for moving up and down the speed reducer 170 needs to be provided, or a separate configuration is required because it is possible to move down a support part of the juice extracting drum, . Even though an elevating device is provided to the speed reducer 170 or the support part may be moved down, when the user of the juice extractor 1 attaches or detaches the juice extracting drum 200, the user of the juice extractor 1 additionally performs an inconvenient procedure, such as operating the elevating device or moving down the support part. Further, the speed reducer for transmitting rotary force to the driving shaft is installed at a higher position than a position of the driving motor, so that an additional connection device by the height is required. In the meantime, even when washing of the juice extractor 1 is considered, the mounting of the speed reducer 170 in the upper end portion of the main body part 110 and the forming of the driving shaft 180 so as to head in the lower direction in the lower portion of the speed reducer 170 causes substantial inconvenience to the user.

In addition, when the driving motor 160 or the speed reducer 170 having relatively larger mass than that of other constituent elements is disposed at the excessively upper side, excessive rotary moment is applied to the juice extractor by the rotary force generated by the driving motor 160. Accordingly, vibration may cause to the juice extractor 1 and the center of gravity of the juice extractor 1 itself rises, so that the operation of the juice extractor 1 is unstable when the driving motor 160 is operated. For the more stable driving of the juice extractor 1, it is necessary to increase a length of the lower support part 120 that is in contact with the ground surface, but the increase of the length of the lower support part 120 has a problem in that cost is increased or an esthetic sense is degraded.

However, according to the first to third exemplary embodiments of the present invention, the driving shaft 180 is not disposed so as to head the lower side, so that it is possible to install the speed reducer 170, which transmits rotary force to the driving shaft 180, at a relatively low position, and it is possible to make the residue or ground materials left during the extraction directly fall to the lower space of the speed reducer 170. Accordingly, it is possible to promote the stable driving of the juice extractor 1 without the foregoing problem.

The position of the speed reducer 170 in the height direction is determined according to a use purpose of the lower space. For example, a spaced distance D between the lower surface of the speed reducer 170 and the ground surface may be set by a height or more of the cup in which the extracted juice and the residue is collected.

The lower support part 120 is extended at one side of the lower portion of the main body part 110 along the ground surface, and generally serves to support the housing 100. Further, the lower support part 120 may serve to relieve vibration generated in the driving motor 160 or a load. The lower support part 120 may be formed in a plate shape, and a cup 700, which takes the residue (or the juice), may be positioned at an inner side of the lower support part 120. However, the present invention is not limited thereto, and the lower support part 120 may also be formed in a shape of a ring.

Referring to FIGS. 1 and 4, according to the first and second exemplary embodiments of the present invention, the upper support part 130 is directly extended from the upper portion of the main body part 110 in the upper direction, and supports the lateral portion of the juice extracting drum 200 through a support curve surface 135 thereof. Further, the upper support part 130 may have the support curve surface 135 formed in a concave shape corresponding to an exterior peripheral surface of the juice extracting drum 200 in order to stably support the juice extracting drum 200.

In the meantime, as illustrated in FIG. 6, according to the third exemplary embodiment of the present invention, the upper support part 130 may be configured in a shape, in which a width of the upper support part 130 is decreased from the upper portion of the main body part 110 to the upper side in the height direction, and a cross section of the upper support part 130 may be generally formed in a trapezoid shape. The support curve surface 135 having the concave shape corresponding to the lateral surface of the juice extracting drum 200 may be formed on one surface of the upper support part 130 in order to support the lateral surface of the juice extracting drum 200. As described above, the upper support part 130 performs the function of supporting the lateral surface of the juice extracting drum 200, so that to this end, the width of the upper portion of the uppers support part 130 is set to be small, thereby promoting the decrease in cost and weight.

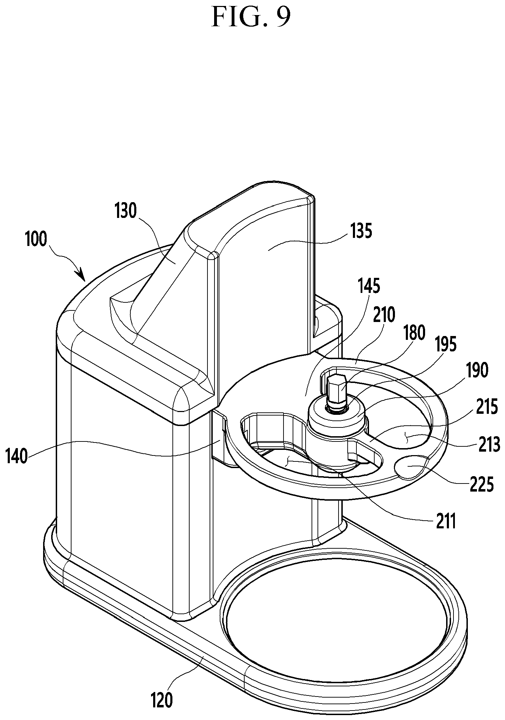

FIGS. 1, 4, and 9 are perspective views of the housings of the juice extractors according to the first to third exemplary embodiments of the present invention.

Referring to FIGS. 1 to 9, the speed reducer housing 140 according to the first to third exemplary embodiments of the present invention is extended from a lateral surface of a center portion of the main body part 110 in the width direction and the speed reducer 170 is mounted inside the speed reducer housing 140. As described above, the reducer 170 is formed of, for example, a combination of the plurality of gears or belts, and serves to transmit rotary force of the driving motor 160 to the driving shaft 180.

According to the first to third exemplary embodiments of the present invention, the speed reducer housing 140 may be generally formed in a disk shape, and the driving shaft 180 connected with the speed reducer 170 protrudes at the center of the speed reducer housing 140 in the upper direction.

Referring to FIGS. 1 to 4, an upper surface of the speed reducer housing 140 may be formed in a shape corresponding to the lower surface of the juice extracting drum 200 so as to allow the juice extracting drum 200 to be seated, and a plurality of fixed protrusions 141, 142, and 143 protruding in the upper direction may be formed on the upper surface of the speed reducer housing 140 for the stable fixing of the juice extracting drum 200.

The fixed protrusions 141, 142, and 143 may be formed in a circumference direction of the speed reducer housing 140 centering on the driving shaft 180, and receiving recesses 221, 222, and 223 formed in the lower surface of the juice extracting drum 200 may correspond and be coupled to the fixed protrusions 141, 142, and 143, respectively. Accordingly, it is possible to promote the stable driving of the juice extracting drum 200.

According to the first to third exemplary embodiments of the present invention, one fixed protrusion 143 among the fixed protrusions 141, 142, and 143 is disposed to be close to the upper support part 130, and is formed to be relatively larger than another fixed protrusions 141 and 142, thereby maximizing convenience when the user attaches and detaches the juice extracting drum 200.

Particularly, one side portion of the one fixed protrusion 143 is formed in a shape convex toward the driving shaft 180 and the other side portion of the one fixed protrusion 143 is connected with the upper support part 130, and the receiving recess 223 of the juice extracting drum 200 corresponding to the fixed protrusion 143 is formed to hold only a lateral portion of the fixed protrusion 143 (see FIG. 2), thereby enabling the one fixed protrusion 143 to be more easily fixed to the juice extracting drum 200.

The speed reducer housing 140 is extended from the center portion of the main body part 110 in the width direction.

The residue discharge passage 230 opened in the height direction is formed at one side in the width direction of the speed reducer housing 140. The residue discharge passage 230 is formed to communicate with a residue discharge port 261 formed in the lower surface of the juice extracting drum 200, and the residue, which fail to pass through net holes of the net drum 400, are pushed downwards and are discharged to the outside of the juice extractor 1 through the residue discharge port 261 and the discharge passage 230.

Referring to FIGS. 1 to 3, the residue discharge passage 230 according to the first exemplary embodiment of the present invention may be formed in a shape recessed from one side of the speed reducer housing 140 toward the driving shaft 180. That is, one end of the residue discharge passage 230 may be opened based on the width direction of the speed reducer housing 140.

The cup 700 according to the first exemplary embodiment of the present invention includes a cup main body 710 and a cup cover 720.

The residue or the ground materials discharged through the residue discharge port 261 and the residue discharge passage 230 may be received in the cup 700.

An inlet 721 and a concave portion 723 are formed in the cup cover 720. The inlet 721 is opened in the height direction, and is formed in such a manner that an outer peripheral surface of the inlet 721 corresponds to the shape of the residue discharge passage 230. The concave portion 723 may be formed in a shape recessed toward an internal side of the cup main body 710 so that the cup cover 720 may be disposed at a lower end of the speed reducer housing 140. Accordingly, the inlet 721 of the cup cover 720 may be fitted to the residue discharge passage 230 and the cup 700 may be disposed at the lower end of the speed reducer housing 140, and the residue or the ground materials may flow in through the inlet 721 and be received in the cup main body 710.

Referring to FIGS. 4 and 5, the residue discharge passage 230 according to the second exemplary embodiment of the present invention may be formed in a shape, which is opened in the height direction and is closed in the width direction.

Referring to FIGS. 6 to 9, a center portion 145, of which a width is decreased, and a driving shaft housing 190, which is provided with the driving shaft 180 and has a cylinder shape, are sequentially formed at the other end of the speed reducer housing 140 according to the third exemplary embodiment of the present invention, and a seating part 210 having a circular ring shape is formed centering on the driving shaft housing 190.

A driving shaft through-hole 195 is formed in a center portion of the driving shaft housing 190, and the driving shaft 180 is inserted into the driving shaft through-hole 195 and protrudes upwards.

The searing part 210 is formed in a shape corresponding to the lower surface of the juice extracting drum 200 so as to allow the juice extracting drum 200 to be seated. The seating part 210 may be extended from the speed reducer housing 140, and may be integrally formed with the driving shaft housing 190 through a connection bridge 215. The connection bridge 215 connects the driving shaft housing 190 and the seating part 210.

That is, the center portion 145, the driving shaft housing 190, and the connection bridge 215 are sequentially extended from the other end of the speed reducer housing 140, and the seating part 210 is extended from another part of the speed reducer housing 140 in a circular ring shape and is connected to another part of the speed reducer housing 140 again. In this case, one side portion of the connection bridge 215 and an inner peripheral portion of the seating part 210 are connected with each other, and the seating part 210 may be symmetrically formed based on the driving shaft housing 190 and the connection bridge 215. According to the configuration, the center portion 145, the driving shaft housing 190, and the connection bridge 215 have shapes straightly crossing the ring-shaped seating part 210, so that one pair of seating holes 211 and 213 is formed inside the seating part 210. The juice extractor may be configured so that the residue (or the juice) are discharged to the one pair of seating holes 211 and 213. Further, the juice extractor may be configured so that ice cream or other ground materials are discharged to the one pair of seating holes 211 and 213.

An inclined recess 225 is formed in an upper surface of one end of the seating part 210, so that a juice discharge passage 220 may be seated on the inclined recess 225 when the juice extracting drum 200 is coupled to the seating part 210. Accordingly, the extracted juice may smoothly flow along the inclined juice discharge passage 220.

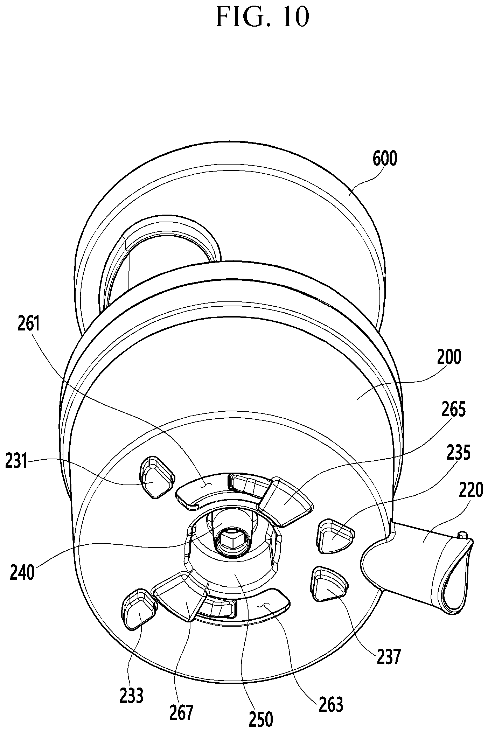

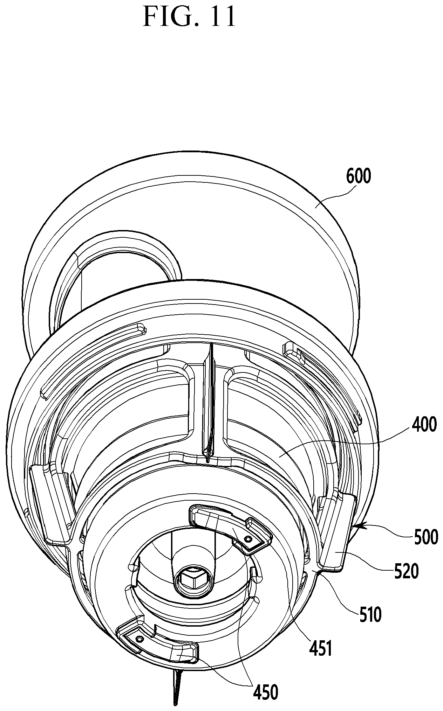

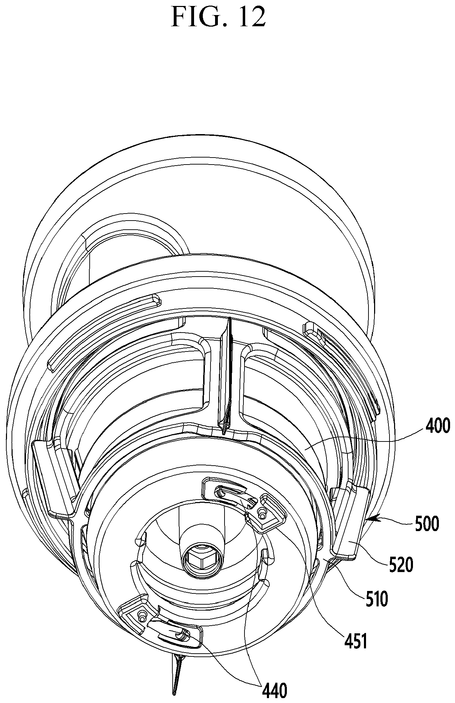

FIG. 10 is a perspective view of the juice extracting drum of the juice extractor according to the third exemplary embodiment of the present invention, and FIGS. 11 and 12 are perspective views of the internal side of the juice extracting drum of the juice extractor according to the third exemplary embodiment of the present invention. That is, FIGS. 11 and 12 are perspective views of the juice extractor of FIG. 10, from which the juice extracting drum is removed. FIGS. 10 to 12 illustrate the juice extractor according to the third exemplary embodiment of the present invention, but the juice extractors according to the first and second exemplary embodiments of the present invention may also have the identical or similar configuration to that of the juice extractor according to the third exemplary embodiment of the present invention..

Referring to FIGS. 8, and 10 to 12, the juice extracting drum 200 may be formed in a cylinder shape, of which an upper portion is opened, and may be provided with the screw 300, the net drum 400, and the brushes 500 inside thereof.

Protrusions 231, 233, 235, and 237 are formed on the lower surface of the juice extracting drum 200, and are coupled to the one pair of seating holes 211 and 213, so that the juice extracting drum 200 is firmly fixed to the seating part 210.

For example, one pair of first and second protrusions 231 and 233 is formed on the lower surface of the juice extracting drum 200 at one side in the width direction, and one pair of third and fourth protrusions 235 and 237 is formed at the other side. The center portion 145 is disposed in a circumferentially directional space between the first and second protrusions 231 and 233, and the connection bridge 215 is disposed in a circumferentially directional space between the third and fourth protrusions 235 and 237. Accordingly, when the user mounts the juice extracting drum 200 to the seating part 210, it is possible to conveniently adjust a position of the juice extracting drum 200 by the protrusions 231, 233, 235, and 237. Further, when the juice extracting drum 200 is mounted and the juice extractor 1 is driven, the protrusions 231, 233, 235, and 237 may limit a movement of the juice extracting drum 200 in a circumferential direction. Further, by the configuration, even though separate receiving recesses for receiving the protrusions 231, 233, 235, and 237 are not formed in the seating part 210, the juice extracting drum 200 may be fixed to the seating part 210.

A first receiving part 240, into which the driving shaft 180 is inserted to transmit power, and a second receiving part 250, which is spaced apart from the first receiving part 240 at a predetermined interval in a direction of an outer side of a radius and into which the driving shaft housing 190 is inserted, are formed in the lower portion of the juice extracting drum 200. The first receiving part 240 and the second receiving part 250 are generally formed in a circular (arc) cylinder shape, and are formed with inner peripheral surfaces having shapes, which are capable of receiving the driving shaft 180 and the driving shaft housing 190, respectively.

Accordingly, when the juice extracting drum 200 is mounted to the seating part 210, the first and second receiving parts 240 and 250 receive the driving shaft 180 and the driving shaft housing 190, respectively, thereby serving to determine a mounting position of the juice extracting drum 200, limit a height directional or width directional movement of the juice extracting drum 200 and reduce vibration like the protrusions 231, 233, 235, and 237, and stably transmit rotary force of the driving motor 160 to the screw 300.

In the meantime, one or more, more preferably, one pair of residue discharge ports 261 and 263 is formed in the lower surface of the juice extracting drum 200 in an arc shape based on the centers thereof. The one pair of residue discharge ports 261 and 263 is formed to face each other based on the center of the juice extracting drum 200, and one pair of coupling members 265 and 267 protrudes downwards while being adjacent to the one pair of residue discharge ports 261 and 263. The residue discharge ports 261 and 263 will be described below when the net drum 400 is described.

The screw 300 receives rotary force from the driving shaft 180 and performs rotary motion, and performs a function of compressing or grinding a to-be extracted target. To this end, the screw 300 is formed with a plurality of screw spirals 310 in a portion that is in contact with the net drum 400. By the screw spirals 310, the to-be extracted target is compressed through a gap between the screw 300 and the net drum 400 and is transferred to the lower side of the screw 300.

The net drum 400 is formed with a plurality of net holes in a lateral surface thereof so that the juice generated by the screw 300 is discharged to the outside of the net drum 400. The net drum 400 is fixed to the juice extracting drum 200 or the cover 600 so as not to rotate together with the screw 300 when the screw 300 rotates.

The residue, which fail to pass through the net holes of the net drum 400 are pushed downwards and are discharged. A lower surface of the net drum 400 is formed in a ring shape, and one pair of net drum discharge ports 440 is formed along the lower surface of the net drum 400. Further, one pair of residue packing parts 450 is installed so as to cover the one pair of net drum discharge ports 440 at the lower side of the one pair of net drum discharge ports 440. The residue discharge ports 261 and 263 are formed at positions corresponding to the net drum discharge ports 440 in the circumferential direction.

The one pair of residue packing parts 450 is formed in an arc shape along a shape of the lower surface of the net drum 400, and is installed in the lower surface of the net drum 400 so as to be separable by fixing parts 451, each of which is formed at one side thereof and is shaped like "c". The fixing part 451 is formed to further protrude than the residue packing part 450 in the lower direction, and the coupling members 265 and 267 are coupled to the fixing parts 451 while surrounding the coupling members 265 and 267 at the lower side.

In the meantime, the net drum 400 may be formed in a form, of which a lower surface is opened. In this case, a ring-shaped residue movement passage (not illustrated) is formed in the lower surface of the juice extracting drum 200, and the residue, which are pushed downwards from the inner side of the net drum 400, rotate along the residue movement passage of the juice extracting drum 200 and are directly discharged vertically downwards through the lower residue discharge ports 261 and 263. In this case, the residue packing parts 450 may be installed in the lower surface of the juice extracting drum 200 so as to cover the residue discharge ports 261 and 263 at the lower side.

The residue packing part 450 is formed of a material having elastic force. Accordingly, even when the residue packing part 450 closes the net drum discharge port 440, the residue packing part 450 may be pushed downwards by pressure inside the net drum 400 or the movement of the residue and the residue may be discharged through the gap. When the residue packing part 450 is installed to completely cover the net drum discharge port 440, the pressure inside the net drum 400 increases, so that the to-be extracted target is more sufficiently compressed and may be effectively separated into juice. Particularly, when the to-be extracted target is formed of rough fibers, such as a pineapple or celery, the residue is discharged by a vertically downward discharge scheme, not the lateral surface discharge scheme, so that the residue is very smoothly discharged.

In the meantime, one pair of net drum discharge ports 440 and one pair of residue packing parts 450 may be provided, and the one pair of residue packing parts 450 is configured to face each other based on the center of the juice extracting drum 200. Accordingly, the residue, which are compressed by the screw 300 and are pushed downwards inside the net drum 400, meet the net drum discharge ports 440 whenever rotating 180° in the lower surface of the net drum 400. As described above, when one pair of net drum discharge ports 440 is formed and one pair of residue packing parts 450 is installed at the lower sides of the net drum discharge ports 440, it is possible to effectively discharge the residue compared to the case where one net drum discharge port 440 and one residue packing part 450 are provided.

As described above, one pair of residue discharge ports 261 and 263 is formed in the lower surface of the juice extracting drum 200, and the residue pushing forward the residue packing parts 450 directly fall through the residue discharge ports 261 and 263. The residue discharge ports 261 and 263 are positioned in the lower directions of the residue packing parts 450, so that the residue passing through the residue packing parts 450 fall vertically downwards as they are. Accordingly, the residue is more smoothly discharged than the case where the residue is discharged to the lateral portion of the juice extracting drum 200.

Although not illustrated in the drawings, the juice extractor 1 according to the exemplary embodiment of the present invention may further include a residue adjusting means which adjusts the packing part 450. An adjusting lever is formed in the residue adjusting means, and the one pair of residue packing parts 450 may be installed so as to rotate a predetermined angle centering on the driving shaft 180. Accordingly, it is possible to adjust the amount of residue discharged in stages according to a demand of the user.

In the meantime, the net drum 400 may be formed in a form having no net holes in the lateral surface thereof so as to be used for the purpose of grinding. In this case, when a material is inserted, the material is compressed and ground by the net drum 400 and the screw 300, but the juice and the residue is not separated and all of the ground materials are discharged through the residue discharge ports 261 and 263. The net drum for grinding may be used in the case where a user desires to obtain food, such as ice cream, smoothie, and sherbet, by inserting materials, such as frozen fruits, chocolate, ice cream, ices, dairy product, and drink together.

Further, even when the net drum 400 for extraction having the net holes in the lateral surface thereof is used, it is possible to obtain food, such as soft ice cream or smoothie, by closing the juice discharge port by using a juice opening/closing device 410, which is capable of opening and closing the juice discharge port, and operating the juice extractor. In this case, the juice extracted through the net holes in the lower portion of the net drum 400 cannot be discharged to the outside by the juice opening/closing device, and is received inside the juice extracting drum 200. When the internal portion of the juice extracting drum 200 becomes to be filled with the juice, the juice flows into the net drum through the net holes in an upper portion of the net drum 400 again and the juice circulates the internal and external portion of the net drum and is continuously mixed with the residue. As a result, it is possible to obtain food having the form of soft ice cream or smoothie, in which the juice and the residue are mixed, through the residue discharge ports 261 and 263.

The brush 500 is disposed between the juice extracting drum 200 and the net drum 400, and includes a brush frame 510 and a brush wing 520. The brush frame 510 is provided to be spaced apart from the juice extracting drum 200 and the net drum 400. The brush wing 520 is formed in a shape bi-directionally protruding from a lateral portion of the brush frame 510 in a radius direction between the holes, and when the brushes 500 rotate, the brushes 500 may sweep down the juices adsorbed to the internal surface of the juice extracting drum 200 and an external surface of the net drum 400.

The cover 600 covers the opened upper portion of the juice extracting drum 200, and to this end, a lower portion of the cover 600 is formed in a shape corresponding to the upper surface of the juice extracting drum 200. The cover 600 includes a material inserting part 610, through which a material is inserted, a hopper 620, which guides the inserted material to the juice extracting drum 200, and a connection part 630 which covers the upper portion of the juice extracting drum 200.

Referring to FIGS. 1 and 4, the material inserting part 610 according to the first and second exemplary embodiments of the present invention may include a first material inserting part 611 and a second material inserting part 641. The first material inserting part 611 is formed in a disk shape, and a first material slot 612 is formed at one side of an upper surface of the first material inserting part 611, so that the material may be inserted into the lateral surface of the hopper 620. Further, the second material inserting part 641 is formed at an upper side of the hopper 620 and a second material slot 643 is formed in an upper surface of the second material inserting part 641, so that a material may be inserted in a longitudinal direction of the hopper 620. Accordingly, an area, through which the user may insert a material, is broadened, and the user may insert the materials to the first and second material slots while mixing the materials through two passages as necessary.

Referring to FIG. 6, the material inserting part 610 according to the third exemplary embodiment of the present invention is formed in a disk shape, and the material slot 613 is formed at one side of the upper surface of the material inserting part 610, so that it is possible to insert a material into an internal side of the material slot 613.

The hopper 620 according to each of the first to third exemplary embodiments of the present invention is extended in the height direction so as to guide the materials flowing-in through the material slots 612, 613, and 641. However, the hopper 620 is not limited thereto, and the hopper 620 may be formed to be inclined to allow a material to naturally slide into the juice extracting drum 200.

A lower end of the hopper 620 is formed at an eccentric position from the driving shaft 180 of the juice extracting drum 200. Accordingly, when the screw 300 rotates, it is possible to smoothly insert a material. A lateral wall 615 extended toward the upper side in the height direction is formed at a border of the material inserting part 610.

The connection part 630 is formed in a shape corresponding to the opened upper portion of the juice extracting drum 200, and is configured to cover the upper portion of the juice extracting drum 200. The connection part 630 guides the materials flowing in from the hopper 620 to the internal side of the juice extracting drum 200.

In the meantime, the juice opening/closing device 410 may be installed at a leading end of the juice discharge passage 220. The juice opening/closing device 410 opens and closes the leading end of the juice discharge passage 220 to enable the juice to be selectively discharged. Further, when the net drum for grinding having no net holes is used, it is possible to give a grinding function.

For example, even when the leading end of the juice discharge passage 220 is closed by using the juice opening/closing device 410 or a material is inserted in the state where the net drum for grinding having no net holes is mounted, the ground materials directly fall vertically downwards, so that the residue is very smoothly discharged. Further, it is possible to easily obtain food, such as ice cream or smoothie

When the left side based on FIG. 1 is considered as a front portion of the juice extractor 1, the residue discharge passage 230 and the juice discharge passage 220 are positioned in the front portion of the juice extractor 1. Further, the cup 700 is laid on the lower support part 120. Accordingly, the cup 700 does not occupy an external peripheral space of the juice extractor 1, and all of the juice and the residue are discharged at the position, such as the front portion of the juice extractor 1, so that the juice extractor 1 is conveniently used and appearance of the juice extractor 1 is improved.

While this invention has been described in connection with what is presently considered to be practical exemplary embodiments, it is to be understood that the invention is not limited to the disclosed embodiments. On the contrary, it is intended to cover various modifications and equivalent arrangements included within the spirit and scope of the appended claims.

## Claims

1. A juice extractor comprising: a main body part including a driving motor and a speed reducer inside the main body part; and a juice extracting drum, which is coupled to one side of the main body part and includes a screw and a net drum formed at an internal side of the juice extracting drum, wherein
a lower surface of the juice extracting drum is formed with a residue discharge port, which discharges residue or ground materials vertically downwards.

2. The juice extractor of claim 1, wherein:
the residue discharge port is formed at a position circumferentially corresponding to one or more net drum discharge ports formed in a lower surface of the net drum.

3. The juice extractor of claim 2, wherein:
one pair of net drum discharge ports and one pair of residue discharge ports are formed, and the one pair of net drum discharge ports and the one pair of residue discharge ports are formed to face each other based on a center of the juice extracting drum.

4. The juice extractor of claim 1, wherein:
the speed reducer is spaced apart from a ground surface by a predetermined distance,
one end of the speed reducer is connected to an upper end portion of the driving motor and the other end of the speed reducer is extended in a width direction so as to be horizontal to the ground surface, and
a driving shaft protrudes from the other end of the speed reducer toward an upper side in a height direction so as to transmit rotary force to the screw.

5. The juice extractor of claim 4, wherein:
the speed reducer is formed of a plurality of gears or belts and transmits driving power of the driving motor to the screw.

6. The juice extractor of claim 4, wherein:
the main body part includes a speed reducer housing extended from a center portion in a width direction, and
a residue discharge passage communicating with the residue discharge port is formed at one side of the speed reducer housing.

7. The juice extractor of claim 6, wherein:
the residue discharge passage is formed in a shape recessed from one side of the speed reducer housing toward the driving shaft.

8. The juice extractor of claim 7, further comprising:
a cup, which receives residue or ground materials discharged through the residue discharge port,
wherein the cup includes:
a cup cover formed with an inlet fitted to the residue discharge passage; and
a cup main body, in which residue or ground materials flowing in through the inlet are received.

9. The juice extractor of claim 6, wherein:
the residue discharge passage is formed in a shape, which is opened in a height direction and is closed in a width direction.

10. The juice extractor of claim 6, wherein:
at least one fixing protrusion is formed on an upper surface of the speed reducer housing, and
at least one receiving recess is formed at a position corresponding to the at least one fixing protrusion in the lower surface of the juice extracting drum.

11. The juice extractor of claim 4, wherein:
the main body part includes:
a speed reducer housing, to which the speed reducer is mounted;
a center portion, of which one end is extended from the speed reducer housing; and
a driving shaft housing, which is formed at one end of the center portion and is provided with the driving shaft at an internal side of the driving shaft housing.

12. The juice extractor of claim 11, wherein:
the main body part further includes:
a seating part, which is formed in a shape of a circular ring at an external side in a radius direction based on the driving shaft housing and is provided so as to allow the juice extracting drum to be seated; and
a connection bridge, which connects the driving shaft housing and the seating part.

13. The juice extractor of claim 12, wherein:
a plurality of protrusions is formed on the lower surface of the juice extracting drum, and
the center portion is disposed between one pair of protrusions among the plurality of protrusions, and the connection bridge is disposed between another one pair of protrusions among the plurality of protrusions, so that the juice extracting drum is coupled to the seating part.
